# EUROPÄISCHE PATENTANMELDUNG

(11) **EP 3 795 932 A1**
(43) Veröffentlichungstag der Anmeldung: **24.03.2021**
(21) Anmeldenummer: 19198462.4
(22) Anmeldetag: 19.09.2019
(51) Int. Cl.: F25D 23/12, F24C 15/34

(54) **THERMISCHE VERNETZUNG VON HAUSHALTSGERÄTEN**

(71) Anmelder: V-Zug AG, 6300 Zug (CH)
(72) Erfinder: Roth, Christian, 6312 Steinhausen (CH); Auerswald, Janko, 6004 Luzern (CH); Dober, Ernst, 6280 Hochdorf (CH); Flück, Stefan, 6064 Kerns (CH); Wellig, Beat, 5034 Suhr (CH)
(74) Vertreter: Hochreutener, Joel Marc

(57) **Zusammenfassung**

Die Erfindung betrifft eine Anordnung umfassend mindestens einen Wärmespeicher (3), mindestens ein erstes Haushaltsgerät (1) und mindestens ein zweites Haushaltsgerät (2). Das mindestens eine erste Haushaltsgerät (1) gibt bei seiner Nutzung Wärme an den mindestens einen Wärmespeicher (3) ab und das mindestens eine zweite Haushaltsgerät (2) nimmt Wärme bei seiner Nutzung vom mindestens einen Wärmespeicher (3) auf.

## Beschreibung

### Gebiet der Erfindung

Die Erfindung betrifft eine Anordnung, welche einen Wärmespeicher, ein erstes wärmeabgebendes Haushaltsgerät und ein zweites wärmeaufnehmendes Haushaltsgerät umfasst.

### Hintergrund

Haushaltsgeräte, wie beispielsweise Geschirrspüler, Waschmaschinen oder Gargeräte, benötigen ein warmes Prozessmedium, insbesondere Wasser. Das Prozessmedium kann beispielsweise auf 60°C temperiert sein. Konventionelle Haushaltsgeräte erwärmen das Prozessmedium mittels elektrischer Energie. Alternativ oder ergänzend können Haushaltsgeräte auch einen Warmwasseranschluss aufweisen. Energieoptimierte Geschirrspüler oder Waschmaschinen umfassen zudem eine Wärmepumpe und Speichertanks, um die Wärmeenergie über mehrere Prozessschritte optimal zu nutzen.

Kühlgeräte halten die Luft im Nutzraum auf einer tiefen Temperatur, um beispielsweise Nahrungsmittel zu kühlen. Hierfür transportiert eine Wärmepumpe Wärmeenergie aus dem Nutzraum hinaus in die Umgebung.

### Darstellung der Erfindung

Es stellt sich die Aufgabe, eine Anordnung von Haushaltsgeräten bereitzustellen, welche energietechnisch optimiert ist. Diese Aufgabe wird durch den Gegenstand des unabhängigen Anspruchs gelöst.

Demgemäss umfasst die Anordnung einen Wärmespeicher, insbesondere drei Wärmespeicher, ein erstes Haushaltsgerät und ein zweites Haushaltsgerät. Der Wärmespeicher, das erste Haushaltsgerät und das zweite Haushaltsgerät sind derart ausgestaltet, dass das erste Haushaltsgerät bei seiner Nutzung Wärme an den Wärmespeicher abgibt, und das zweite Haushaltsgerät Wärme bei seiner Nutzung vom Wärmespeicher aufnimmt.

Diese Anordnung hat den Vorteil, dass die abgegebene Wärme des ersten Haushaltsgeräts nicht verloren geht, sondern in einem Wärmespeicher gespeichert wird. Die gespeicherte Wärme kann vom zweiten Haushaltsgerät verwendet werden. Dies führt zu einer reduzierten Energienutzung und damit zu einer Reduktion des Stromverbrauchs bzw. zu einer Reduktion der Stromkosten.

Aufgrund der Speicherung der Energie im Wärmespeicher steht die Abwärme des ersten Haushaltsgeräts für das zweite Haushaltsgerät zu einem späteren Zeitpunkt zur Verfügung. Im Weiteren können auch unterschiedliche Leistungsbedürfnisse überbrückt werden. Beispielsweise gibt ein Kühlschrank ca. 100 Watt Wärme ab, während ein Geschirrspüler ca. 2'000 Watt Wärme bezieht. Die vom Kühlschrank abgegebene Wärme kann vom Wärmespeicher gespeichert und mit einer höheren Leistung an den Geschirrspüler abgegeben werden.

Das Energiesparpotenzial hängt davon ab, welche Temperatur die Abwärme des ersten Haushaltsgeräts aufweist und auf welche Temperatur das Prozessmedium im zweiten Haushaltsgerät erwärmt werden muss. Der Wärmespeicher kann damit den Energiebedarf des zweiten Haushaltsgeräts nur teilweise oder vollständig decken. Im Weiteren hängt das Energiesparpotential auch von Wärmeverlusten ab. Je näher die Geräte zueinander angeordnet sind, umso weniger Energie geht auf dem Wärmetransfer zwischen zwei Geräten verloren.

Vorteilhaft ist das erste Haushaltsgerät ein Kühlgerät, insbesondere ein Kühlschrank oder ein Gefrierschrank. Das Kühlgerät kann eine Kompressionskältemaschine aufweisen. Das zweite Haushaltsgerät ist vorteilhaft ein Geschirrspüler.

Kühlschrank und Geschirrspüler ergänzen sich energietechnisch optimal. Die Wärmepumpe des Kühlschrankes erzeugt permanent, je nach Gerät mit gewissen Unterbrüchen, Abwärme, mit welcher der Wärmespeicher aufgeheizt und anschliessend auch warm gehalten werden kann. Der Geschirrspüler benötigt, zumindest in einem üblichen Privathaushalt, nur unregelmässig Wärmeenergie. Da die Wärmeenergie im Wärmespeicher aber permanent verfügbar ist, kann der Geschirrspüler die gespeicherte Wärmeenergie zu einem späteren Zeitpunkt abrufen. Nach einem Geschirrspülvorgang muss der Wärmespeicher mit Energie dann erneut geladen werden. Da der Geschirrspüler nur unregelmässig verwendet wird, ist aber in der Regel genügend Zeit vorhanden, um den Wärmespeicher wieder vollständig aufzuladen.

Anzumerken ist, dass die Nutzung des Kühlschrankes und des Geschirrspülers in einem Privathaushalt positiv korreliert. In einem Einpersonenhaushalt werden grundsätzlich weniger Lebensmittel im Kühlschrank gelagert, weshalb nur eine verhältnismässig geringe Abwärme dem Wärmespeicher zufliesst. Gleichzeit ist in einem Einpersonenhaushalt aber auch die Benutzung des Geschirrspülers reduziert, weshalb nur beschränkt Wärme zur Verfügung gestellt werden muss. Die Zeitspannen, während denen der Wärmespeicher aufgeladen werden kann, sind verhältnismässig gross.

Im Vergleich zu einem Einpersonenhaushalt werden in einem Haushalt einer Grossfamilie sowohl der Kühlschrank als auch der Geschirrspüler stärker genutzt. Entsprechend stellt der Kühlschrank mehr Wärme zur Verfügung und der Geschirrspüler benötigt mehr Wärme.

Beide Haushaltsgeräte, d.h. sowohl der Kühlschrank als auch der Geschirrspüler sind in einem Privathaushalt in der Küche eingebaut. Bevorzugt werden der Geschirrspüler und der Kühlschrank direkt nebeneinander angeordnet.

Vorteilhaft umfasst das mindestens eine erste Haushaltsgerät ein Kühlgerät, eine Waschmaschine, einen Wäschetrockner, einen Waschtrockner und/oder ein Gargerät, insbesondere einen Backofen, und/oder das mindestens eine zweite Haushaltsgerät umfasst einen Geschirrspüler, eine Waschmaschine, einen Wäschetrockner, einen Waschtrockner und/oder ein Gargerät, insbesondere einen Backofen, einen Dampfgarer, oder ein Kochfeld, umfasst.

Insbesondere können beim Kühlgerät der Kondensator und/oder ein, insbesondere zusätzlich einzubauender, Enthitzer der Wärmepumpe, bei einer Waschmaschine das warme Abwasser, beim Wäschetrockner der Kondensator der Wärmepumpe oder beim Gargerät die warme Abluft Wärme abgeben.

Mit Vorteil umfasst das mindestens eine erste Haushaltsgerät ein Kühlgerät, insbesondere aufweisend eine Kompressionskältemaschine, und/oder das mindestens eine zweite Haushaltsgerät umfasst einen Geschirrspüler. In einer anderen Variante umfasst das mindestens eine erste Haushaltsgerät einen Wäschetrockner und/oder das mindestens eine zweite Haushaltsgerät umfasst eine Waschmaschine. Die Waschmaschine nimmt Wärme zur Aufheizung des Reinigungswassers auf.

Bevorzugt umfasst die Anordnung eine Solaranlage und/oder eine Abwasserleitung, welche dem mindestens einen Wärmespeicher Wärmeenergie zuführt.

In einer bevorzugten Ausführungsform umfasst der Wärmespeicher einen Schichtladespeicher, mehrere separate Tanks, insbesondere mit jeweils unterschiedlichen Temperaturniveaus, einen Latentwärmespeicher, und/oder einen thermochemischen Wärmespeicher.

Im Weiteren kann der Wärmespeicher eine Wärmepumpe aufweisen, welche derart ausgestaltet ist, dass der Temperaturunterschied zwischen einem Kaltbereich und einem Warmbereich und/oder zwischen dem Warmbereich und einem Heissbereich des Wärmespeichers vergrösserbar ist.

Umfasst der Wärmespeicher beispielsweise drei Temperaturbereiche, einen Kaltbereich, einen Warmbereich und einen Heissbereich, kann die Wärmepumpe mit dem Wärmespeicher derart verbunden sein, dass das Wärmespeichermittel vom Warmbereich in den Heissbereich strömt und dabei Energie vom Kondensator der Wärmepumpe aufnimmt, während Wärmespeichermittel vom Warmbereich in den Kaltbereich strömt und dabei Energie an den Verdampfer der Wärmepumpe abgibt.

Dies hat zur Folge, dass im Kaltbereich möglichst kaltes Wärmespeichermittel und im Heissbereich möglichst heisses Wärmespeichermittel gespeichert wird. Während das heisse Wärmespeichermittel beispielsweise zur Erwärmung des Prozessmediums im Geschirrspüler einsetzbar ist, kann das kalte Wärmespeichermittel zur Abkühlung der Prozessluft in einem Wäschetrockner benutzt werden.

Mittels der Wärmepumpe kann Wärmeenergie von einem kühleren Bereich in einen wärmeren Bereich transferiert werden. Dadurch steht Wärmeenergie auf einer höhen Temperatur zur Verfügung, welche vom zweiten Haushaltsgerät genutzt werden kann.

In einer besonderen Ausführungsform weist der Schichtladespeicher horizontale Schichttrennplatten auf und/oder der Schichtladespeicher weist eine Höhe auf, welche grösser ist, insbesondere doppelt, insbesondere dreifach, insbesondere zehnfach, so gross ist, als seine Breite.

Vorteilhaft weist der Wärmespeicher ein Speichervolumen von mehr als 10 Liter, insbesondere mehr als 15 Liter und/oder weniger als 30 Liter, insbesondere weniger als 20 Liter, auf. Insbesondere kann der Wärmespeicher hinter Schubladen in einer Küche angeordnet sein.

Bevorzugt umfasst die Anordnung Wärmemittelleitungen zur Zirkulation von Wärmespeichermittel zwischen dem ersten Haushaltsgerät und dem Wärmespeicher und zwischen dem Wärmespeicher und dem zweiten Haushaltsgerät. Das Wärmespeichermittel ist bevorzugt ein flüssiges Wärmeübertragungsmedium mit hoher Wärmekapazität wie beispielsweise Wasser oder ein Wasser/Glykol-Gemisch. Das erste Haushaltsgerät umfasst mindestens einen ersten Wärmetauscher zum Übertragen von Wärme vom ersten Haushaltsgerät auf das in den Wärmemittelleitungen zirkulierende Wärmespeichermittel. Das zweite Haushaltsgerät umfasst mindestens einen zweiten Wärmetauscher zum Übertragen von Wärme vom Wärmespeichermittel in den Wärmemittelleitungen auf das zweite Haushaltsgerät.

Vorteilhaft sind der erste und/oder der zweite Wärmetauscher ein Doppelrohrwärmetauscher, insbesondere ein Gegenstromdoppelrohrwärmetauscher, oder ein Plattenwärmetauscher. Damit wird ein effizienter Wärmetransfer ermöglicht.

Bevorzugt bilden die Wärmemittelleitungen und der Wärmespeicher einen geschlossenen Kreislauf, in welchem das Wärmespeichermittel zirkuliert.

### Kurze Beschreibung der Zeichnung

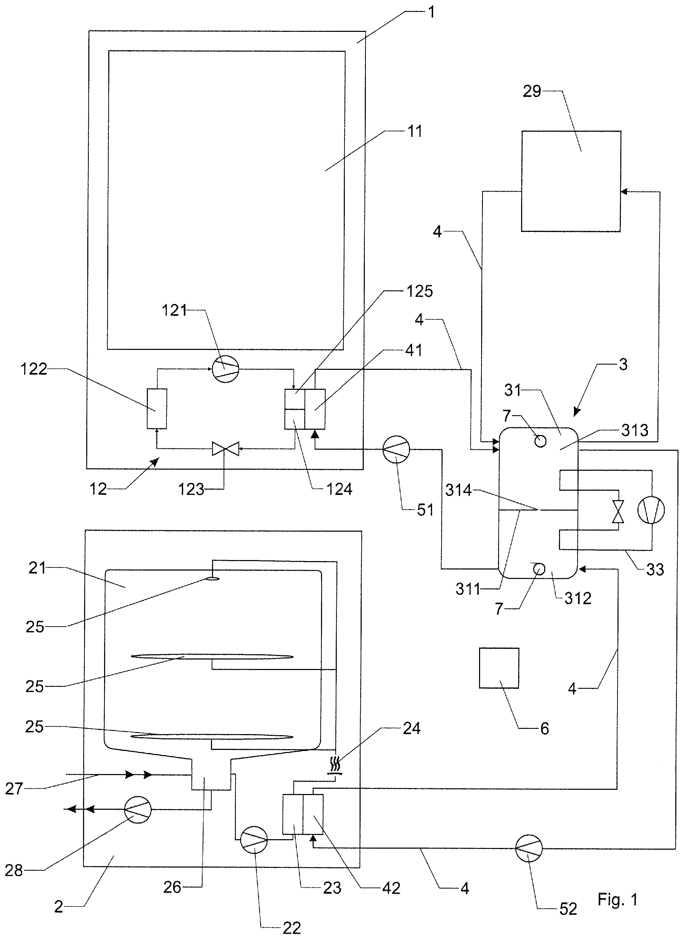

Weitere Ausgestaltungen, Vorteile und Anwendungen der Erfindung ergeben sich aus den abhängigen Ansprüchen und aus der nun folgenden Beschreibung anhand der Figur 1. Die Figur 1 zeigt eine Anordnung mit einem Kühlgerät, einem Geschirrspüler und einem Wärmespeicher.

### Wege zur Ausführung der Erfindung

Fig. 1 zeigt eine schematische Darstellung der erfinderischen Anordnung. Die Anordnung umfasst einen Kühlschrank 1, einen Geschirrspüler 2 und einen Wärmespeicher 3. Der Kühlschrank 1 gibt Wärme ab und ist gemäss der Erfindungsdefinition ein erstes Haushaltsgerät. Der Geschirrspüler 2 nimmt Wärme auf und ist gemäss der Erfindungsdefinition ein zweites Haushaltsgerät.

Der Kühlschrank 1 umfasst einen Nutzraum 11, in welchem beispielsweise Nahrungsmittel aufbewahrt und gekühlt werden können. Weiter ist im Sockel oder an einer anderen geeigneten Stelle des Kühlschranks 1 eine Kompressionskältemaschine bzw. eine Wärmepumpe 12 angeordnet. Die Wärmepumpe 12 kühlt die Luft im Nutzraum 11 auf eine Temperatur von beispielsweise 2 bis 7°C. Die Wärmepumpe 12 umfasst einen Kompressor 121, einen Verdampfer 122, welcher Wärme der Luft im Nutzraum 11 entzieht, eine Drosselvorrichtung 123, einen Kondensator 124 und einen Enthitzer 125. Der Enthitzer 125 liegt zwischen dem Kompressor 121 und dem Kondensator 124. Er führt überhitztes, gasförmiges Wärmepumpenmedium.

Der Geschirrspüler 2 umfasst einen Nutzraum 21, in welchem Geschirr gereinigt und getrocknet werden kann. Zur Reinigung zirkuliert Wasser in einem Zirkulationssystem. Dieses umfasst eine Zirkulationspumpe 22, ein Wärmeaufnahmeelement 23, ein Heizsystem 24, ein Sprühsystem 25 und einen Sumpf 26, aus welchem das Spülwasser mittels der Zirkulationspumpe 22 dem Sprühsystem zugeführt wird. Im Weiteren umfasst der Geschirrspüler 2 eine Frischwasserzufuhr 27 und eine Ablaufpumpe 28.

Der Wärmespeicher 3 umfasst einen Tank 31, welcher mit Wärmemittelleitungen 4 verbunden ist. Im Tank 31 und in den Wärmemittelleitungen 4 zirkuliert Wasser als Wärmespeichermittel. Als Wärmespeichermittel kann aber auch ein anderes Medium, beispielsweise ein Wasser-Glykol-Gemisch, benutzt werden. Die Zirkulation erfolgt mittels Zirkulationspumpen 5. Der Tank 31 ist als Schichtladespeicher ausgestaltet und umfasst wahlweise horizontale Schichttrennplatten 311. Die horizontalen Schichttrennplatten 311 verringern die Durchmischung des Kaltbereichs 312 und des Warmbereichs 313. Die Schichttrennplatten 311 umfassen mehrere Durchlässe 314, sodass sich der Kaltbereich 312 und der Warmbereich 313 während des Lade- und Entladevorgangs verkleinern resp. vergrössern können. Der Durchlass 314 ist derart dimensioniert, dass zwar Wasser durch die Durchlässe 314 strömen kann, sich das kalte Wasser im Kaltbereich 312 und das warme Wasser im Warmbereich 313 aufgrund von Verwirbelungen aber möglichst nicht vermischt. Alternativ können beispielsweise drei Unterteilungen des Tanks oder sogar drei separate Tanks vorgesehen sein, welche sich auf einem tiefen, einem mittleren und einem hohen Temperaturniveau befinden.

Der Wärmespeicher 3 kann auch einen Latentwärmespeicher umfassen, welcher ihm zugeführte thermische Energie in Form von latenter Wärme speichert. Im Weiteren kann der Wärmespeicher auch als thermochemischer Wärmespeicher ausgestaltet sein, welcher Wärme durch eine endotherme Reaktion speichert und durch eine exotherme Reaktion wieder abgibt. Auch möglich ist die Ausgestaltung des Wärmespeichers als sensibler Wärmespeicher. Diese Typen von Wärmespeichern sind dem Fachmann bekannt und werden deshalb vorliegend nicht weiter dokumentiert.

Der Wärmespeicher 3 ist etwa zehnfach so hoch wie breit und umfasst ein Speichervolumen von 15 Liter.

Der Wärmespeicher 3 umfasst weiter eine Wärmepumpe 33. Mittels der Wärmepumpe 33 kann Wärmeenergie vom Kaltbereich 312 in den Warmbereich 313 transferiert werden. Die Wärmepumpe 33 hat zur Folge, dass die Temperaturdifferenz zwischen dem Kaltbereich 312 und dem Warmbereich 313 vergrössert werden kann. Mit einer höheren Temperatur im Warmbereich 313 kann das im Geschirrspüler 2 zirkulierende Wasser stärker und schneller erwärmt werden. Gleichzeitig kann mit einer tieferen Temperatur im Kaltbereich 312 stärker und schneller Energie vom Kühlschrank 1 bezogen werden. Das System wird vor allem auch dann effizienter, wenn die Wärmepumpe 12 des Kühlschranks auf einem auf die Temperatur des Wärmespeichermittels abgestimmten Temperaturniveau betrieben wird.

Im Weiteren wird dem Wärmespeicher 3 Wärmeenergie von einer Solaranlage 29 zugeführt.

Die Wärmemittelleitungen 4 umfassen ein im Kühlschrank 1 angeordnetes Wärmeaufnahmeelement 41 und ein im Geschirrspüler 2 angeordnetes Wärmeabgabeelement 42. Das Wärmeaufnahmeelement 41 und der Kondensator 124 und/oder der Enthitzer 125 bilden zusammen einen ersten Wärmetauscher. Das Medium im Wärmeaufnahmeelement 41 und das Kältemittel im Enthitzer und/oder im Kondensator 125 strömen vorteilhaft im Gegenstrom. Der erste Wärmetauscher ist beispielsweise als Gegenstromdoppelrohrwärmetauscher ausgestaltet.

Das Wärmeabgabeelement 42 und das Wärmeaufnahmeelement 23 im Geschirrspüler bilden zusammen einen zweiten Wärmetauscher. Eine vorteilhafte Ausgestaltung des zweiten Wärmetauschers ist ebenfalls ein Gegenstromdoppelrohrwärmetauscher.

Der Wärmespeicher 3 und die Wärmemittelleitungen 4 bilden einen geschlossenen Kreislauf. Das Wärmespeichermittel strömt beispielsweise nicht innerhalb des Zirkulationssystems des Geschirrspülers 2.

Die Anordnung umfasst im Weiteren eine Steuerung 6. Die Steuerung 6 steuert insbesondere die Wärmepumpe 33 und die Zirkulationspumpen 51 und 52 der Wärmemittelleitungen 4. Der Steuerung werden Temperaturdaten der Temperatursensoren 7, welche im Kaltbereich 312 und im Warmbereich 313 angeordnet sind, und Temperaturdaten des Kühlschranks 1 und des Geschirrspülers 2 zugeführt. Anhand dieser Daten können die Zirkulationspumpen 51, 52 und die Wärmepumpe 33 optimal geregelt werden.

Im Folgenden wird nun das Verfahren der thermischen Vernetzung des Kühlschranks 1 und des Geschirrspülers 2 näher erläutert.

Während des Betriebs des Kühlschrankes 1 fördert die Zirkulationspumpe 51 Wasser durch die Wärmemittelleitungen 4 vom Kaltbereich 312 des Tanks 31 zum Wärmeaufnahmeelement 41 und vom Wärmeaufnahmeelement 41 zurück in den Warmbereich 313 des Tanks 31. Der Kreislauf wird geschlossen, indem Wasser vom Warmbereich 313 durch die Durchlässe 314 in den Kaltbereich 312 strömt.

Während der Zirkulation gibt die Wärmepumpe 12 des Kühlschranks 1 Wärme über den Kondensator und/oder den Enthitzer 125 an das Wärmeaufnahmeelement 41 bzw. an das im Wärmeaufnahmeelement 41 strömende Wasser ab. Das erwärmte, zirkulierende Wasser strömt in den Warmbereich 313 und mischt sich mit dem im Warmbereich 313 bereits vorhandenen Wasser. Das im Warmbereich 31 gespeicherte Wasser erwärmt sich. Das kalte Wasser, welches sich im unteren Bereich des Warmbereichs 313 befindet, strömt durch die Durchlässe 314 in den Kaltbereich 312.

Die Wärmepumpe 33 transferiert Wärme vom Kaltbereich 312 in den Warmbereich 313. Dadurch erhöht sich die Temperaturdifferenz zwischen dem Kaltbereich 312 und dem Warmbereich 313. Optimal wird das Wasser im Warmbereich auf ca. 70°C bis 90°C und das Wasser im Kaltbereich auf ca. 30°C bis 50°C temperiert.

Zu Beginn eines Geschirrspülprozesses fördert die Zirkulationspumpe 52 warmes Wasser aus dem Warmbereich 31 zum Wärmeabgabeelement 42 und vom Wärmeabgabeelement 42 zurück in den Kaltbereich 312 des Tanks 31. Vom Wärmeabgabeelement 42 wird Wärme auf das im Geschirrspüler 2 durch das Wärmeaufnahmeelement 23 strömende Zirkulationswasser transferiert. Das Zirkulationswasser im Geschirrspüler 2 kann dadurch auf die gewünschte Prozesstemperatur erhöht werden. Kann die gewünschte Prozesstemperatur nicht erreicht werden, aktiviert der Geschirrspüler zusätzlich das Heizsystem 24.

Nicht gezeigt, aber auch vorstellbar ist, dass dem Abwasser bzw. der Abwasserleitung des Geschirrspüler Wärme entzogen und dem Wärmespeicher 3 zugeführt werden kann.

In analoger Weise kann als erstes Haushaltsgerät beispielsweise ein Wäsche- oder Waschtrockner dienen. Im Wäsche- oder Waschtrockner wird der Prozessluft zur Entfeuchtung Wärme entzogen und zum Wärmespeicher transferiert. Andererseits kann der Wäsche- oder Waschtrockner auch als zweites Haushaltsgerät dienen, denn für die Erwärmung der Prozessluft, nachdem sie zur Entfeuchtung abgekühlt wurde, wird Wärmeenergie benötigt.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Anordnung umfassend mindestens einen Wärmespeicher (3), mindestens ein erstes Haushaltsgerät (1) und mindestens ein zweites Haushaltsgerät (2), **dadurch gekennzeichnet, dass** das mindestens eine erste Haushaltsgerät (1) bei seiner Nutzung Wärme an den mindestens einen Wärmespeicher (3) abgibt, und das mindestens eine zweite Haushaltsgerät (2) Wärme bei seiner Nutzung vom mindestens einen Wärmespeicher (3) aufnimmt.

2. Anordnung nach Anspruch 1, wobei
- das mindestens eine erste Haushaltsgerät (1) ein Kühlgerät, eine Waschmaschine, einen Wäschetrockner, einen Waschtrockner, und/oder ein Gargerät, insbesondere einen Backofen, umfasst, und/oder
- das mindestens eine zweite Haushaltsgerät (2) einen Geschirrspüler, eine Waschmaschine, einen Wäschetrockner, ein Waschtrockner, und/oder ein Gargerät, insbesondere einen Backofen, einen Dampfgarer, oder ein Kochfeld, umfasst.

3. Anordnung nach Anspruch 1, wobei
- das mindestens eine erste Haushaltsgerät ein Kühlgerät, insbesondere aufweisend eine Kompressionskältemaschine, und/oder das mindestens eine zweite Haushaltsgerät einen Geschirrspüler umfasst, oder
- das mindestens eine erste Haushaltsgerät (1) einen Wäschetrockner und/oder das mindestens eine zweite Haushaltsgerät (2) eine Waschmaschine umfasst.

4. Anordnung nach einem der vorangehenden Ansprüche, wobei die Anordnung
- eine Solaranlage (29), und/oder
- eine Abwasserleitung, insbesondere eine Abwasserleitung eines wasserführenden Haushaltsgerätes, umfasst, welche mit dem mindestens einen Wärmespeicher (3) zum Zuführen von Wärmeenergie verbunden ist.

5. Anordnung nach einem der vorangehenden Ansprüche, wobei der mindestens eine Wärmespeicher (3)
- einen Schichtladespeicher,
- mehrere separate Tanks, insbesondere mit jeweils unterschiedlichem Temperaturniveaus,
- einen Latentwärmespeicher,
- einen sensiblen Wärmespeicher,
- einen thermochemischen Wärmespeicher, und/oder
- eine Kombination der erwähnten Wärmespeicher
umfasst.

6. Anordnung nach einem der vorangehenden Ansprüche, wobei der mindestens eine Wärmespeicher (3) eine Wärmepumpe (33) aufweist, welche derart ausgestaltet ist, dass der Temperaturunterschied zwischen einem Kaltbereich (312) und einem Warmbereich (313) und/oder zwischen dem Warmbereich und einem Heissbereich des mindestens einen Wärmespeichers (3) vergrösserbar ist.

7. Anordnung nach einem der vorangehenden Ansprüche, wobei der mindestens eine Wärmespeicher (3) als Schichtladespeicher ausgestaltet ist und mindestens eine horizontale Schichttrennplatte (311) aufweist und/oder wobei der Schichtladespeicher eine Höhe aufweist, welche grösser ist, insbesondere doppelt, insbesondere dreifach, insbesondere zehnfach, so gross ist, als seine Breite.

8. Anordnung nach einem der vorangehenden Ansprüche, wobei der mindestens eine Wärmespeicher (3) ein Speichervolumen von mehr als 10 Liter, insbesondere mehr als 15 Liter und/oder weniger als 30 Liter, insbesondere weniger als 20 Liter, aufweist.

9. Anordnung nach einem der vorangehenden Ansprüche, umfassend Wärmemittelleitungen (4) zur Zirkulation von Wärmespeichermittel zwischen dem mindestens einen ersten Haushaltsgerät (1) und dem mindestens einen Wärmespeicher (3) und zwischen dem mindestens einen Wärmespeicher (3) und dem mindestens einen zweiten Haushaltsgerät (2), wobei
das mindestens eine erste Haushaltsgerät (1) einen ersten Wärmetauscher zum Übertragen von Wärme vom ersten Haushaltsgerät (1) auf das Wärmespeichermittel in den Wärmemittelleitungen (4), und
das mindestens eine zweite Haushaltsgerät (2) einen zweiten Wärmetauscher zum Übertragen von Wärme vom Wärmespeichermittel in den Wärmemittelleitungen (4) auf das mindestens eine zweite Haushaltsgerät (2) aufweist.

10. Anordnung nach Anspruch 9, wobei der erste und/oder der zweite Wärmetauscher Doppelrohrwärmetauscher, insbesondere Gegenstromdoppelrohrwärmetauscher, oder ein Plattenwärmetauscher sind.

11. Anordnung nach einem der Ansprüche 9 oder 10, wobei das Wärmespeichermittel Wasser oder ein Wasser-Glykol-Gemisch ist.

12. Anordnung nach einem der Ansprüche 9 bis 11, wobei die Wärmemittelleitungen (4) und der mindestens eine Wärmespeicher einen geschlossenen Kreislauf bilden, in welchem das Wärmespeichermittel zirkuliert.
